## Europäisches Patentamt
## European Patent Office
## Office européen des brevets

(19)

(11) Veröffentlichungsnummer: **0 134 779**
**B1**

(12) **EUROPÄISCHE PATENTSCHRIFT**

(45) Veröffentlichungstag der Patentschrift:
**28.10.87**

(51) Int. Cl.⁴: **F 01 L 25/06**, F 16 H 35/14

(21) Anmeldenummer: **84890146.8**

(22) Anmeldetag: **01.08.84**

(54) **Einrichtung zur Steuerung eines mit einem Druckmedium betriebenen Motors.**

(30) Priorität: **02.08.83 AT 2797/83**

(43) Veröffentlichungstag der Anmeldung:
**20.03.85 Patentblatt 85/12**

(45) Bekanntmachung des Hinweises auf die Patenterteilung:
**28.10.87 Patentblatt 87/44**

(84) Benannte Vertragsstaaten:
**AT BE CH DE FR GB IT LI LU NL SE**

(56) Entgegenhaltungen:
**WO - A - 80/02722**
**DE - C - 134 618**
**FR - A - 375 250**
**GB - A - 164 925**

(73) Patentinhaber: **Ing. Waldhauser Maschinenfabrik Gesellschaft mbH & Co. KG, Puchbachweg 239, A-8591 Maria Lankowitz (AT)**

(72) Erfinder: **Knieschek, Siegbert, Feldgasse 7, A-8580 Köflach (AT)**

(74) Vertreter: **Gibler, Ferdinand, Dipl.Ing.Dr.tech., Dorotheergasse 7/14, A-1010 Wien (AT)**

## Beschreibung

Die Erfindung bezieht sich auf eine Einrichtung zur Steuerung eines mit einem Druckmedium betriebenen Motors.

Es ist bereits – gemäss DE-C-134 618 – eine Steuerung für direkt wirkende Pumpen bekannt. Dabei wird ein auf einer Schieberstange verschiebbares Gleitstück von einer Kolbenstange mittels Hebelübersetzung in eine hin- und hergehende Bewegung versetzt. Bei Bewegung des mit der Kolbenstange verbundenen Dampfkolbens wird das Gleitstück in gleicher Richtung verschoben, während durch eine Klinke ein innerhalb des Gleitstückes angeordneter und unter Federdruck stehender Bund festgehalten wird. Nach fortgeschrittener Komprimierung der Feder wird die Klinke durch eine am Gleitstück befestigte Stellschraube ausgelöst und dadurch der genannte Bund mitsamt der Schieberstange verschoben. Mit dieser Verschiebebewegung wird die Pumpe umgesteuert. Für die nächste Umsteuerung erfolgt der beschriebene Vorgang der Verschiebung eines weiteren, spiegelbildlich zum ersten angeordneten Bundes mit einer Klinkenauslösung. Der Nachteil dieser bekannten Lösung liegt in deren sehr aufwendigen, eine Vielzahl von Schiebelagern aufweisenden Konstruktion und in der Notwendigkeit, zwei gegeneinander wirkende Federn vorzusehen.

Es ist auch – gemäss FR-A-375 250 – eine von der Anmeldung völlig abweichende Art einer Motorsteuerung mit einem Kippschalter bekannt, bei der aber keine Hängeeinrichtung vorgesehen ist. Damit ergeben sich jedoch entsprechende Nachteile im Hinblick auf die Exaktheit der Steuerung.

Ziel der Erfindung ist es, diese Nachteile der bekannten Lösungen zu vermeiden und eine Einrichtung der eingangs erwähnten Art vorzuschlagen, die sich durch einen einfachen und robusten Aufbau auszeichnet und bei der trotzdem ein exaktes Umsteuern der Sperrorgane gewährleistet ist, um Verluste am Druckmedium wie auch, insbesondere bei, durch einen Balg gebildeten Motoren eine Überlastung zu vermeiden.

Erfindungsgemäss ist daher die Einrichtung zur Steuerung eines mit einem Druckmedium betriebenen Motors derart ausgebildet, dass dieser über eine Schaltstange zur Steuerung von den den Zustrom und den Ablauf des Druckmediums steuernden Sperrorganen ausgebildet ist, wobei zwischen Schaltstange und den Sperrorganen ein Schnappmechanismus mit einem Kippschalter vorgesehen ist, der eine an einem Kipphebel und an einem weiteren schwenkbar gehaltenen, mit der Schaltstange gelenkig verbundenen Hebel angelenkte federbelastete Teleskopstange aufweist, die gleichzeitig als Führung der Feder dient, und Einrastklinken mit dem Kipphebel zusammenwirken.

Auf diese Weise ergibt sich ein sehr einfacher Aufbau, wobei durch das, durch den Kippschalter bedingte Sprungverhalten und die Hemmeinrichtung ein rasches und exaktes Umsteuern der Sperrorgane bei Erreichen der Endstellungen gewährleistet ist. Dadurch werden auch Verluste am Druckmedium durch Öffnen des Ablaufes bei noch nicht geschlossenem Zustrom und auch Überlastungen von Bälgen durch zu langes Offenhalten des Zulaufs vermieden. Eine exakte Auslösung der Umschaltung der Absperrorgane ist insbesondere bei Motoren von grosser Bedeutung, die nur eine sehr langsame Bewegung ausführen, und z.B. nur 0,5 bis 5 Hübe pro Minute ausführen, da bei solchen Motoren eine starke Neigung zu unregelmässigen Umschaltungen gegeben ist und es häufig zu Umschaltungen vor Erreichen der entsprechenden Endlagen kommt. Durch die Einrastklinken ist jedoch Sicherheit gegeben, da der Kippschalter auf eine mit Sicherheit ausreichende Schaltkraft vorgespannt wird.

Es ist besonders vorteilhaft, wenn an den Einrastklinken verstellbare Anschläge, vorzugsweise Gewindebolzen, angeordnet sind, an denen der mit der Schaltstange verbundene Hebel anschlägt.

Um auch bei Verwendung von relativ verschmutzten Druckmedien einen weitgehend störungsfreien Betrieb zu gewährleisten, ist es vorteilhaft, wenn die Sperrorgane durch Absperrklappen oder Quetschschläuche samt Anpresselementen, wie z.B. Rollen, gebildet sind, wobei vorzugsweise die Schaltstange an einem schwenkbaren Arm angelenkt ist, der mit dem beweglichen Teil des Motors verbunden ist. Auf diese Weise wird eine sehr robuste und unempfindliche Konstruktion erreicht. Ausserdem ergibt sich durch eine einstellbare Verbindung des beweglichen Teiles des Motors mit dem schwenkbaren Arm der Vorteil, dass die vom Motor auf die anzutreibende Einrichtung ausgeübte Kraft durch die veränderbaren Hebelarme an den jeweiligen Bedarf angepasst werden kann.

Die Erfindung wird nun an Hand der Zeichnungen näher erläutert.

Dabei zeigt:

Fig. 1 eine Draufsicht,

Fig. 2 und 3 Ansichten in zwei verschiedenen Stellungen der Einrichtung gem. Fig. 1 und

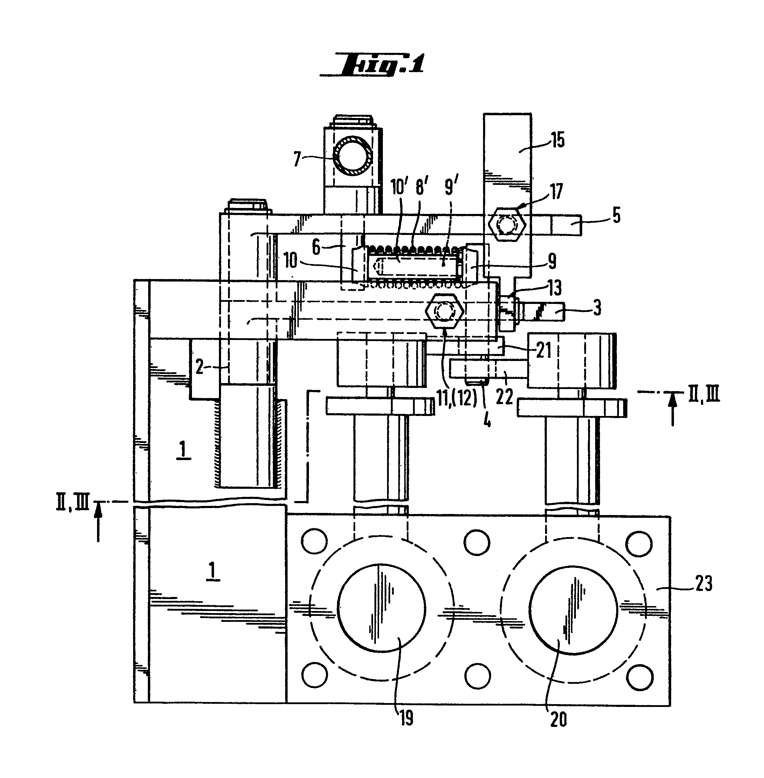

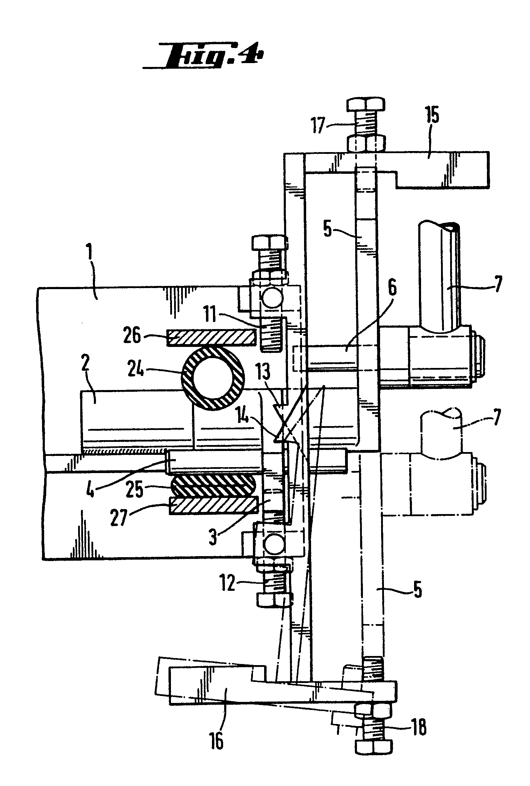

Fig. 4 eine Kreuzrissdarstellung einer der Ausführungsform gemäss Fig. 1 bis 3 ähnlichen Ausführungsform, die sich nur durch die Art der Sperrorgane von dieser unterscheidet. Bei der Ausführungsform gemäss Fig. 1 bis 3 sind die Sperrorgane durch zwei Klappen 19, 20 gebildet, die den Einlass bzw. den Auslass des nicht dargestellten Motors steuern und in einem Klappenflansch 23 angeordnet sind. Die Klappen sind über Wellen mit Klappenhebeln 21, 22, die den Antrieb der Klappen 19, 20 bilden, drehfest verbunden; diese Klappenhebel 21, 22 sind miteinander über einen Bolzen 4 bewegungsschlüssig verbunden, wobei der Bolzen 4 an dem Kipphebel 3 befestigt ist. Dieser Kipphebel ist schwenkbar am Geräteträger 1 über Achse 2 befestigt und kann in dem, durch die verstellbare Kipphebelanlage 11, 12 bestimmten Bereich verschwenkt werden.

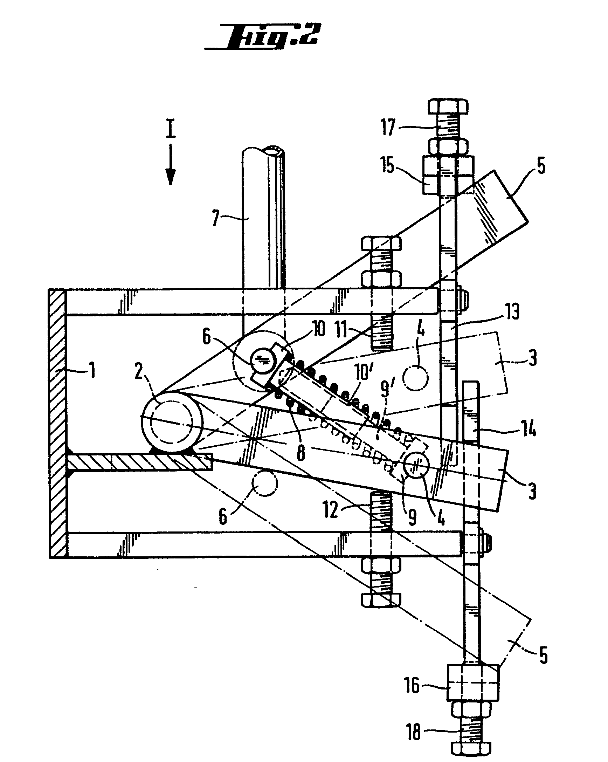

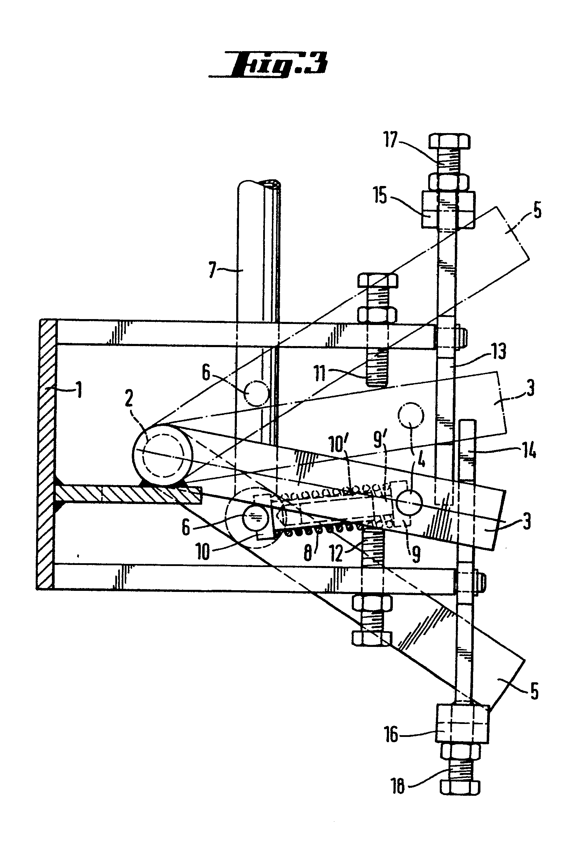

Der Kipphebel 3 ist weiters über einen Kippschalter mit einem weiteren Hebel 5 verbunden, wobei dieser Kippschalter durch die beiden Federteller 9, 10 und die Feder 8 sowie die aus den Teilen 9', 10' bestehende Teleskopstange gebildet ist, wobei die Teleskopstange 9', 10' über den Bolzen 4 und einen Stift 6 mit dem Kipphebel 3 bzw. dem Hebel 5 gelenkig verbunden ist. Die beiden Hebel 3 und 5 sind, wie aus Fig. 2 und 3 ersichtlich, um eine gemeinsame Achse 2 schwenkbar.

Der Hebel 5 ist über den Stift 6 weiters mit einer Schaltstange 7 verbunden, die mit dem beweglichen Teil des Motors mitbewegt wird und z.B. über einen, um eine gestellfeste Achse schwenkbaren Arm, mit diesem verbunden ist.

Für den Kipphebel 3 sind noch Einrastklinken 13, 14 vorgesehen, die ihn in bestimmten Stellungen halten, auch wenn durch den Kippschalter bzw. dessen Feder bereits eine, gegen seine andere Reststellung gerichtete Kraft auf ihn ausgeübt wird (Fig. 3).

Diese Einrastklinken 13, 14 sind schwenkbar am Geräteträger 1 gehalten und durch Rückstellgewichte 15, 16 gegen ihre Festhaltestellung belastet und daher stets bestrebt, diese einzunehmen. Weiters weisen die Einrastklinken 13, 14 noch verstellbare Anschläge 17, 18 auf, die durch Gewindebolzen gebildet sind. Der Kipphebel 3 wird daher von den Einrastklinken stets in einer seiner Raststellungen gehalten, solange nicht der, mit der Schaltstange 7 verbundene Hebel 5 an einen Anschlag 17 bzw. 18 einer Einrastklinke 13 bzw. 14 anstösst und die Klinke aus ihrer Festhaltestellung drängt, wie dies aus Fig. 4 strichpunktiert ersichtlich ist, in der jedoch als Sperrorgane statt der Klappen 19, 20 gem. Fig. 1 bis 3 Quetschschläuche 24, 25, dargestellt sind, die an Anpressleisten 26, 27 anliegen und durch den, an dem Kipphebel 3 befestigten Bolzen 4 abwechselnd gepresst werden.

Wird nun die Schaltstange 7 aus der in Fig. 2 dargestellten Lage nach unten bewegt, so wird dabei die Feder 8 des Kippschalters zusammengepresst, wobei der Kipphebel 3 von der Einrastklinke 14 gehalten wird, bis der Stift 6 in Deckung mit der Mittellinie des Kipphebels 3 gelangt und dabei die Totpunktlage überschritten wird – (kulminiert). Bei der weiteren Bewegung der Schaltstange nach unten kommt es zwar zu einem geringfügigen Entspannen der Feder 8, doch nimmt die nach oben gerichtete Komponente der auf den Bolzen 4 ausgeübten Kraft zu. Bei der weiteren Bewegung der Schaltstange 7 nach unten stösst der mit ihr verbundene Hebel 5 gegen den Anschlag 18 der Einrastklinke 14 und drängt diese aus ihrer Festhaltestellung, sodass diese den Kipphebel 3 freigibt und dieser nach oben schnellt (strichpunktiert in Fig. 2 und 3 gezeigt), wodurch die Sperrorgane schlagartig umgeschaltet werden.

Die Einstellung der Anschläge 17, 18 ist dabei so gewählt, dass die Freigabe des Kipphebels 3 stets bei Erreichen einer Endstellung des Motors bzw. knapp vor dem Erreichen derselben erfolgt.

Durch die Umsetzung der Sperrorgane kommt es zu einer Bewegung des beweglichen Teiles des Motors in der zur vorherigen Bewegung entgegengesetzten Richtung, weshalb sich die Schaltstange 7 nach oben bewegt und sich dabei der zuvor beschriebene Vorgang wiederholt.

## Patentansprüche

1. Einrichtung zur Steuerung eines mit einem Druckmedium betriebenen Motors, der über eine Schaltstange (7) zur Steuerung von den den Zustrom und den Ablauf des Druckmediums steuernden Sperrorganen (19, 20, 24, 25) ausgebildet ist, wobei zwischen Schaltstange (7) und den Sperrorganen (19, 20, 24, 25) ein Schnappmechanismus mit einem Kippschalter (8, 9, 10) vorgesehen ist, der eine an einem Kipphebel (3) und an einem weiteren schwenkbar gehaltenen, mit der Schaltstange (7) gelenkig verbundenen Hebel (5) angelenkte federbelastete Teleskopstange (9', 10') aufweist, die gleichzeitig als Führung der Feder (8) dient, und Einrastklinken (13, 14) mit dem Kipphebel (3) zusammenwirken.

2. Einrichtung nach Anspruch 1, dadurch gekennzeichnet, dass an den Einrastklinken (13, 14) verstellbare Anschläge (17, 18) vorzugsweise Gewindebolzen, angeordnet sind, an denen der mit der Schaltstange (7) verbundene Hebel (5) anschlägt.

3. Einrichtung nach Anspruch 1, dadurch gekennzeichnet, dass die Sperrorgane durch Absperrklappen (19, 20) oder Quetschschläuchen (24, 25) samt Anpresselementen (26, 27), wie z.B. Rollen gebildet sind.

4. Einrichtung nach Anspruch 1, dadurch gekennzeichnet, dass in dem Kipphebel (3) ein Bolzen (4) gehalten ist, der in den Endstellungen des Kipphebels (3) gegen einen Quetschschlauch (24, 25) drückt.

## Revendications

1. Dispositif de commande d'un moteur actionné par un fluide sous pression, qui est agencé pour, par l'intermédiaire d'une tige de manœuvre (7), commander des organes d'obturation (19, 20, 24, 25) commandant l'arrivée et la sortie du fluide sous pression, entre la tige de manœuvre (7) et les organes d'obturation (19, 20, 24, 25) étant prévu un mécanisme à déclic comportant un commutateur à bascule (8, 9, 10) qui comprend une tige télescopique (9', 10') à ressort, articulée sur un levier oscillant (3) et sur un autre levier (5) monté oscillant et articulé sur la tige de manœuvre (7), laquelle tige télescopique (9', 10') servant en même temps de guide pour le ressort (8), et des cliquets (13, 14) coopèrant avec le levier oscillant (3).

2. Dispositif selon la revendication 1, caractérisé par le fait que sur les cliquets (13, 14 sont placées des butées réglables (17, 18), de préférence des boulons filetés, contre lesquelles bute le levier (5) lié à la tige de manœuvre (7).

3. Dispositif selon la revendication 1, caractérisé par le fait que les organes d'obturation sont formés par des clapets (19, 20) ou par des tuyaux flexibles écrasables (24, 25) avec éléments presseurs (26, 27), comme par exemple des galets.

4. Dispositif selon la revendication 1, caractérisé par le fait que dans le levier oscillant (3) est monté un boulon (4) qui, lorsque ce levier (3) est dans ses positions extrêmes, exerce un pression sur un tuyau flexible écrasable (24, 25).

**Claims**

1. Device for controlling a motor which is driven by a pressure medium and is designed to control the blocking members (19, 20, 24, 25) controlling the supply and discharge of the pressure medium via a switching rod (7), wherein there is provided between the switching rod (7) and the blocking members (19, 20, 24, 25) a snap mechanism having a rocker switch (8, 9, 10) which has a spring-loaded telescopic rod (9', 10') hinged to a rocker lever (3) and to a further pivotally mounted lever (5) hinged to the switching rod (7), which telescopic rod serves simultaneously as guide for the spring (8), and wherein snap-in catches (13, 14) cooperate with the rocker lever (3).

2. Device according to claim 1, characterised in that there are arranged on the snap-in catches (13, 14) adjustable stops (17, 18), preferably threaded bolts, against which the lever (5) connected to the switching rod (7) strikes.

3. Device according to claim 1, characterised in that the blocking members are formed by blocking flaps (19, 20) or compressible tubes (24, 25) together with clamping elements (26, 27), such as, for example, rollers.

4. Device according to claim 1, characterised in that there is mounted in the rocker lever (3) a bolt (4) which, in the end positions of the rocker lever (3), presses against one compressible tube (24, 25).

1/4

**Fig.1**

**Fig.2**

**Fig.3**

Fig. 4